Europäisches Patentamt

**European Patent Office**

**Office européen des brevets**

(11) Veröffentlichungsnummer : **0 004 879**
**B1**

(12) # EUROPÄISCHE PATENTSCHRIFT

(45) Veröffentlichungstag der Patentschrift : **21.07.82**

(51) Int. Cl.³ : **C 08 G 18/76, C 08 G 18/14**

(21) Anmeldenummer : **79100903.8**

(22) Anmeldetag : **24.03.79**
**Die Akte enthält technische Angaben, die nach dem Eingang der Anmeldung eingereicht wurden und die nicht in dieser Patentschrift enthalten sind.**

(54) **Verfahren zur Herstellung von Polyurethan-Weichschaumstoffen unter Verwendung einer urethanmodifizierten Mischung aus Diphenylmethan-diisocyanaten und Polyphenyl-polymethylen-polyisocyanaten mit einem Diphenyl-methan-diisocyanat-Isomerengehalt von 55 bis 85 Gewichtsprozent als Polyisocyanat.**

(30) Priorität : **11.04.78 DE 2815579**

(43) Veröffentlichungstag der Anmeldung :
**31.10.79 (Patentblatt 79/22)**

(45) Bekanntmachung des Hinweises auf die Patenterteilung : **21.07.82 Patentblatt 82/29**

(84) Benannte Vertragsstaaten :
**BE CH DE FR GB IT NL SE**

(56) Entgegenhaltungen :
**DE - A - 2 513 793**
**DE - A - 2 624 526**
**US - A - 4 055 548**

(73) Patentinhaber : **BASF Aktiengesellschaft**
**Carl-Bosch-Strasse 38**
**D-6700 Ludwigshafen (DE)**

(72) Erfinder : **Jarre, Wolfgang, Dr.**
**Limesstrasse 3**
**D-6700 Ludwigshafen (DE)**
Erfinder : **Stutz, Herbert, Dr.**
**Schneidemuehler Strasse 9c**
**D-7500 Karlsruhe 1 (DE)**
Erfinder : **Schoen, Ernst, Dr.**
**Burgunder Strasse 40**
**D-6730 Neustadt 14 (DE)**

Verfahren zur Herstellung von Polyurethan-Weichschaumstoffen unter Verwendung einer urethanmodifizierten Mischung aus Diphenylmethan-diisocyanaten und Polyphenylpolymethylen-polyisocyanaten mit einem Diphenylmethandiisocyanat-Isomerengehalt von 55 bis 85 Gewichtsprozent als Polyisocyanat

Die Erfindung betrifft ein Verfahren zur Herstellung von Polyurethan-Weichschaumstoffen, wobei als organisches Polyisocyanat eine urethanmodifizierte Mischung aus Diphenylmethan-diisocyanaten und Polyphenyl-polymethylen-polyisocyanaten mit einem Gehalt an Diphenylmethan-diisocyanat-Isomeren von 55 bis 85 Gew.%, einem NCO-Gehalt von 15 bis 30 Gew.% und einer Viskosität von 100 bis 2 000 mPa.s 20 °C verwendet wird.

Die Herstellung von Polyurethan-Weichschaumstoffen ist bekannt. Hierzu werden als Polyisocyanate üblicherweise Toluylen-diisocyanate bzw. die handelsüblichen Gemische aus 2,4- und 2,6-Toluylen-diisocyanat verwendet. Nachteilig hierbei ist, daß Toluylen-diisocyanate aufgrund ihres hohen Dampfdruckes relativ stark toxisch sind und deshalb bei der Verarbeitung besondere Vorsichtsmaßnahmen getroffen und beachtet werden müssen.

Zur Verminderung der Toxizität und Erhöhung der Reaktivität wurde vorgeschlagen, anstelle von Toluylen-diisocyanaten Mischungen aus Toluylen-diisocyanaten und eines Gemisches homologer Polyaryl-polyalkylen-polyisocyanate zur Herstellung von Polyurethankunststoffen, einschließlich Schaumstoffen, zu verwenden.

Obwohl Mischungen aus Diphenylmethan-diisocyanaten und Polyphenyl-polymethylen-polyisocyanaten wegen des deutlich niedrigeren Dampfdruckes weniger toxisch sind, hat die ausschließliche Verwendung dieser Polyisocyanatmischungen zur Herstellung von Polyurethan-Weichschaumstoffen in der Technik keinen Anklang gefunden. Der Hauptgrund hierfür ist im ungenügenden mechanischen Eigenschaftsniveau, insbesonders der sehr niedrigen Bruchdehnung derartiger Polyurethanschaumstoffe zu sehen. Dies ist umso überraschender, als Mischungen aus Diphenylmethan-diisocyanaten und Polyphenyl-polymethylen-polyisocyanaten als Polyisocyanatkomponente zur Herstellung anderer Polyurethan-Schaumstofftypen, wie Hartschaumstoffen, Hartintegralschaumstoffen und Weichintegralschaumstoffen eine breite Anwendung gefunden haben.

Flexible Polyurethan-Weichschaumstoffe werden nach Angaben der GB-PS 874 430 durch Um-setzung von Polyätherpolyolen mit mindestens 2 Hydroxylgruppen und einer Polyisocyanatmischung aus Diarylmethan-diisocyanaten und 5 bis 50 Gew.% eines Polyisocyanats mit einer Funktionalität größer als 2 in Gegenwart von Wasser hergestellt. Nachteilig an dem beschriebenen Verfahren sind die schlechte Verarbeitbarkeit der schaumfähigen Polyurethanmischungen, die beim Aufschäumen zum Kollabieren neigen und die unzulänglichen mechanischen Eigenschaften der hergestellten Schaumstoffe.

Aufgabe der vorliegenden Erfindung war es, Polyurethan-Weichschaumstoffe mit guten mechanischen Eigenschaften auf Basis nicht, oder zumindest wenig, toxischer Polyisocyanate problemlos herzustellen.

Diese Aufgabe wurde gelöst durch ein Verfahren zur Herstellung von Polyurethan-Weichschaumstoffen aus organischen Polyisocyanaten, Polyolen, Katalysatoren, Treibmitteln und gegebenenfalls Kettenverlängerungsmitteln sowie Hilfs- und Zusatzstoffen, das dadurch gekennzeichnet ist, daß man als organische Polyisocyanate urethanmodifizierte aromatische Polyisocyanate mit einem NCO-Gehalt von 15 bis 30 Gew.% und einer Viskosität von 100 bis 2 000 mPa.s/20 °C verwendet, die erhalten werden durch Umsetzung einer Mischung aus Diphenylmethan-diisocyanaten und Polyphenyl-polymethylen-polyisocyanaten mit einem Gehalt an Diphenylmethan-diisocyanat-Isomeren von 55 bis 85 Gew.% und einer Hydroxylverbindung mit 2 bis 4 Zerewitinoff aktiven Wasserstoffatomen und einem Molekulargewicht von 60 bis 1 500 im Äquivalenzverhältnis von NCO-Gruppe zu aktivem Wasserstoffatom der Hydroxylverbindung von 2 : 1 bis 60 : 1.

Überraschenderweise wurde festgestellt, daß durch die Auswahl der erfindungsgemäß verwendbaren urethanmodifizierten Polyisocyanatmischung in Kombination mit üblichen Polyolen und Wasser oder Mischungen aus Wasser und niedrigsiedenden gegebenenfalls halogenierten Kohlenwasserstoffen oder Dimethyläther als Treibmittel Polyurethan-Weichschaumstoffe mit hervorragenden mechanischen Eigenschaften erhalten werden.

Ein wesentliches Merkmal des erfindungsgemäßen Verfahrens ist die Verwendung einer aromatischen urethanmodifizierten Polyisocyanatmischung als Polyisocyanatkomponente, die hergestellt wird durch Umsetzung einer Mischung aus Diphenylmethan-diisocyanaten und Polyphenyl-polymethylen-polyisocyanaten mit einem Gehalt an Diphenylmethan-diisocyanatisomeren von 55 bis 85 Gew.%, vorzugsweise von 60 bis 70 Gew.% und einer Hydroxylverbindung mit 2 bis 4, vorzugsweise 2 Zerewitinoff aktiven Wasserstoffatomen und einem Molekulargewicht von 60 bis 1 500, vorzugsweise von 120 bis 1 000 im Äquivalenzverhältnis von NCO-Gruppe zu aktivem Wasserstoff der Hydroxylverbindung von 2 : 1 bis 60 : 1, vorzugsweise von 5 : 1 bis 50 : 1.

Die Herstellung von Mischungen aus Diphenylmethan-diisocyanaten und Polyphenyl-polymethylen-polyisocyanaten mit obengenanntem Gehalt an Diphenylmethan-diisocyanatisomeren kann beispielsweise analog den Angaben der DE-OS 24 25 658 durchgeführt werden. Hierbei ist im wesentlichen unerheblich, in welchen Mengenverhältnissen die isomeren 4,4'-, 2,4'- und 2,2'-Diphenylmethandiisocyanate zueinander in der Mischung vorliegen. Erfindungswesentlich ist in erster Linie, daß der Gesamtgehalt an Diphenylmethan-diisocyanat-Isomeren in der Mischung den obengenannten Konzentrationsbedingungen entspricht. Vorzugsweise verwendet werden jedoch solche Mischungen, die einen Gehalt an 2,4'-Diphenylmethan-diisocyanat kleiner als 10 Gew.-%, insbesonders kleiner als 3 Gew.-%, bezogen auf das Gesamtgewicht an Diphenyl-methan-diisocyanat-Isomeren, aufweisen.

Geeignete Hydroxylverbindungen mit 2 bis 4 Zerewitinoff aktiven Wasserstoffatomen und Molekulargewichten von 60 bis 1 500 sind beispielsweise Alkanolamine, wie Mono-, Di- und Triäthanolamin, Mono-, Di- und Triisopropanolamin, Stickstoffatome enthaltende Alkoxylierungsprodukte mit Molekulargewichten von 100 bis 1 500, vorzugsweise von 100 bis 500, hergestellt durch Alkoxylierung von di- bis tetrafunktionellen NH-Gruppen haltigen Startermolekülen, wie gegebenenfalls N-mono- und N,N'-dialkylsubstituierten Diaminen mit 1 bis 4 C-Atomen im Alkylrest und 2 bis 12, vorzugsweise 2 bis 6 C-Atomen in der Alkylengruppe, wie Äthylendiamin, Butylendiamin-1,4 und Hexamethylendiamin-1,6 und gegebenenfalls N-mono- und N,N'-dialkylsubstituierten Hydrazinen mit 1 bis 4 C-Atomen im Alkylrest, wie Hydrazin, N,N'-Dimethylhydrazin und N,N'-Dibutylhydrazin, mit Alkylenoxiden, wie Äthylenoxid und Propylenoxid oder deren Gemische und 2- bis 4-wertige Alkohole, wie Äthylenglykol, Glycerin, Trimethylolpropan und Pentaerythrit. Vorzugsweise verwendet werden jedoch zweiwertige Alkohole, wie Propylenglykol, Dipropylenglykol, Tripropylenglykol und oligomere Propylenglykole mit Molekulargewichten bis 1 500 sowie Neopentylglykol.

Die erfindungsgemäß verwendbaren aromatischen, urethanmodifizierten Polyisocyanatmischungen besitzten NCO-Gehalte von 15 bis 30 Gew.-%, vorzugsweise von 25 bis 30 Gew.-%, und Viskositäten von 100 bis 2 000 mPa.s/20 °C, vorzugsweise von 120 bis 1 500 mPa.s/20 °C.

Zur Herstellung der Polyurethan-Weichschaumstoffe nach dem erfindungsgemäßen Verfahren kommen als Polyole, vorzugsweise Polyesterole und insbesondere Polyätherole, in Betracht. Verwendet werden können jedoch auch andere hydroxylgruppenhaltige Polymere mit Molekulargewichten von 400 bis 7 500, beispielsweise Polycarbonate, insbesondere solche, hergestellt durch Umesterung von Diphenylcarbonat mit Hexandiol-1,6, Polyoxymethylen und Polyesteramide.

Geeignete Polyesterole können beispielsweise aus Dicarbonsäuren, vorzugsweise aliphatischen Dicarbonsäuren mit 2 bis 12 Kohlenstoffatomen im Alkylenrest und mehrwertigen Alkoholen, vorzugsweise Diolen, hergestellt werden.

Genannt seien beispielhaft aliphatische Dicarbonsäuren, wie Glutarsäure, Pimelinsäure, Korksäure, Azelainsäure, Sebacinsäure, Undecandisäure, Dodecandisäure und vorzugsweise Bernstein- und Adipinsäure, cycloaliphatische Dicarbonsäuren, wie 1,3- und 1,4-Cyclohexan-dicarbonsäure und aromatische Dicarbonsäuren, wie Phthalsäure und Terephthalsäure. Beispiele für zwei- und mehrwertige, insbesondere zweiwertige Alkohole sind : Äthylenglykol, Diäthylenglykol, 1,2- bzw. 1,3-Propylenglykol, Dipropylenglykol, Decandiol-1,10, Glycerin, Trimethylolpropan und vorzugsweise Butandiol-1,4 und Hexandiol-1,6. Sofern zur Herstellung der Polyesterole mehrwertige, insbesondere dreiwertige, Alkohole mitverwendet werden, muß deren Gehalt so gewählt werden, daß die Funktionalität maximal 3,5, vorzugsweise 2 bis 2,3 ist.

Besonders bewährt und daher vorzugsweise verwendet werden solche Polyesterole, die durch Polykondensation eines Dicarbonsäuregemisches, das bezogen auf das Gesamtgewicht der genannten Dicarbonsäuren enthält : 20 bis 35 Gew.%, vorzugsweise 28 bis 33 Gew.% Bernsteinsäure, 35 bis 50 Gew.%, vorzugsweise 40 bis 45 Gew.% Glutarsäure und 20 bis 32 Gew.%, vorzugsweise 24 bis 28 Gew.% Adipinsäure und Alkoholmischungen aus Äthylenglykol/Diäthylenglykol, Äthylenglykol/Trimethylolpropan und Diäthylenglykol/Trimethylolpropan hergestellt werden. Das Dicarbonsäuregemisch kann neben den genannten Dicarbonsäuren noch bis zu 5 Gew.%, vorzugsweise 2 bis 3 Gew.%, bezogen auf das Gesamtgewicht, Verunreinigungen enthalten, welche im wesentlichen aus Imiden der Bernstein- und Glutarsäure bestehen. Dicarbonsäuregemische der genannten Art können beispielsweise als Nebenprodukte bei der Herstellung von Adipinsäure durch Oxidation von Cyclohexanol oder Cyclohexanon mit Salpetersäure gewonnen werden. Die Polyesterole, die Molekulargewichte von 500 bis 5 000, vorzugsweise 1 500 bis 3 000 und Funktionalitäten von 2 bis 3,5, vorzugsweise 2 bis 2,3 besitzen, können als solche oder in Form von Mischungen erfindungsgemäß eingesetzt werden.

Als Polyole sind jedoch insbesonders Polyätherole mit Molekulargewichten von 400 bis 7 500, vorzugsweise von 2 000 bis 5 000, und Funktionalitäten von 2 bis 3, vorzugsweise 2 bis 2,3 geeignet. Die vorzugsweise im wesentlichen linearen Polyätherole werden nach bekannten Verfahren aus einem oder mehreren Alkylenoxiden mit 2 bis 4 Kohlenstoffatomen im Alkylenrest und einem Startermolekül, das 2 bis 3, vorzugsweise 2 aktive Wasserstoffatome gebunden enthält, hergestellt. Geeignete Alkylenoxide sind beispielsweise Tetrahydrofuran, 1,3-Propylenoxid, 1,2- bzw. 1,3-Butylenoxid, Styroloxid und vorzugsweise Äthylenoxid und 1,2-Propylenoxid. Die Alkylenoxide können einzeln, alternierend nacheinander oder als Mischungen verwendet werden. Als Startermoleküle kommen beispielsweise in Betracht : Wasser, Dicarbonsäuren, wie Bernsteinsäure, Adipinsäure, Phthalsäure und Terephthalsäure, N,N'-dialkylsubstituierte Diamine mit 1 bis 4 Kohlenstoffatomen im Alkylrest auf Basis von beispielsweise Äthylendiamin, 1,2- bzw. 1,3-Propylendiamin, 1,4-Butylendiamin, 1,6-Hexamethylendiamin, 4,4'-, 2,4'- und 2,2'-Diaminodiphenylmethan sowie N-Alkyl-diäthanolamin und vorzugsweise mehrwertige, insbesondere zweiwertige Alkohole, wie Äthylenglykol, 1,2- bzw. 1,3-Propylenglykol, Diäthylenglykol, 1,2- und 1,3-Dipropylenglykol, Butylenglykol-1,4, Hexamethylenglykol-1,6, Glycerin und Trimethylolpropan.

Die Polyätherole können als solche oder in Form von Mischungen verwendet werden.

Anstelle der Polyesterole oder Polyätherole können auch Mischungen aus Polyester- und Polyätherolen eingesetzt werden, wobei das Verhältnis der Komponenten je nach Verwendungszweck des herzustellenden Weichschaumstoffes in breiten Grenzen, beispielsweise im Gewichtsverhältnis von Polyesterol zu Polyätherol von 80 : 20 bis 5 : 95 variiert werden kann.

Gegebenenfalls kann es zweckmäßig sein, neben den genannten Polyolen zusätzlich Kettenverlängerungsmittel zur Herstellung der Polyurethan-Weichschaumstoffe mitzuverwenden. Als Kettenverlängerungsmittel kommen insbesondere difunktionelle Verbindungen mit Molekulargewichten von 18 bis kleiner 300 in Betracht. Vorzugsweise verwendet werden aliphatische Diole mit 2 bis 6 Kohlenstoffatomen, wie Äthylenglykol, 1,4-Butylenglykol und 1,6-Hexamethylenglykol und aromatisch aliphatische Diole wie Di-($\beta$-hydroxyäthylhydrochinon).

Ein anderes Merkmal des erfindungsgemäßen Verfahrens ist die Verwendung von Wasser, das mit dem Isocyanatgemisch reagiert und Kohlendioxid liefert als Treibmittel. Vorzugsweise werden 2 bis 6 Gew.%, insbesondere 2,5 bis 3,5 Gew.% Wasser, bezogen auf das Gewicht des Polyols, verwendet. Anstelle von Wasser allein können auch Mischungen aus Wasser und chemisch inerten, niedrigsiedenden, gegebenenfalls halogenierten Kohlenwasserstoffen oder Äthern als Treibmittel angewandt werden. In Betracht kommen beispielsweise gegebenenfalls halogenierte Kohlenwasserstoffe mit Siedepunkten unter 50 °C, vorzugsweise zwischen −50 °C und 30 °C bei Atmosphärendruck. Im einzelnen seien beispielhaft genannt halogenierte Kohlenwasserstoffe, wie Monochlordifluormethan, Dichlormonofluormethan, Dichlordifluormethan und Trichlorfluormethan und deren Gemische und Kohlenwasserstoffe wie Propan und Isobutan sowie Dimethyläther. Geeignete Mischungen aus Wasser und gegebenenfalls halogenierten Kohlenwasserstoffen bestehen im allgemeinen aus 5 bis 70 Gew.%, vorzugsweise 10 bis 50 Gew.% Wasser und 30 bis 95 Gew.%, vorzugsweise 50 bis 90 Gew.%, gegebenenfalls halogenierten Kohlenwasserstoffen, wobei die Gew.% bezogen sind auf das Gesamtgewicht der Treibmittelmischung. Die erforderlichen Mengen an Treibmittelmischung lassen sich auf einfache Weise in Abhängigkeit vom Mischungsverhältnis Wasser zu gegebenenfalls halogeniertem Treibmittel sowie der gewünschten Schaumstoffdichte experimentell ermitteln und betragen ungefähr 2 bis 40, vorzugsweise 5 bis 25 Gew.%, bezogen auf das Polyolgewicht. ·

Dem schaumfähigen Reaktionsgemisch können ferner Katalysatoren, die die Polyurethanbildung beschleunigen und gegebenenfalls Hilfs- und Zusatzstoffe, wie sie üblicherweise zur Herstellung von Polyurethan-Weichschaumstoffen Anwendung finden, einverleibt werden. In Betracht kommen beispielsweise oberflächenaktive Stoffe, Flammschutzmittel, Porenregler, Antioxidationsmittel, Hydrolysenschutzmittel, Farbstoffe, Füllstoffe und andere Zusätze.

Geeignete Katalysatoren zur Beschleunigung der Umsetzung zwischen den Polyolen, dem Wasser, gegebenenfalls Kettenverlängerungsmitteln und der erfindungsgemäßen urethanmodifizierten Polyisocyanatmischung sind beispielsweise tertiäre Amine, wie Dimethylbenzylamin, N,N, N′,N′-Tetramethyl-diamino-äthyläther, Bis-(dimethylaminopropyl)-harnstoff, N-Methyl- bzw. N-Äthylmorpholin, Dimethylpiperazin, 1,2-Dimethylimidazol, 1-Azo-bicyclo-(3,3,0)-octan und vorzugsweise Triäthylendiamin ; Metallsalze, wie Zinn-dioctoat, Bleioctoat, Zinn-diäthylhexoat und vorzugsweise Zinn-(II)-salze und Dibutylzinndilaurat sowie insbesonders Mischungen aus tertiären Aminen und organischen Zinnsalzen. Vorzugsweise verwendet werden 0,5 bis 5 Gew.% Katalysator auf Basis tertiärer Amine und/oder 0,01 bis 2,5 Gew.% Metallsalze, bezogen auf das Polyolgewicht.

In Betracht kommen ferner beispielsweise oberflächenaktive Substanzen, welche zur Unterstützung der Homogenisierung der Ausgangsstoffe dienen und gegebenenfalls auch geeignet sind, die Zellstruktur der Polyurethan-Weichschaumstoffe zu regulieren. Genannt seien beispielhaft Siloxan-Oxyalkylen-Mischpolymerisate und andere Organopolysiloxane, oxäthylierte Alkylphenole, oxäthylierte Fettalkohole, Paraffinöle, Ricinusöl- bzw. Ricinolsäureester und Türkischrotöl, die in Mengen von 0,2 bis 6 Gewichtsteilen pro 100 Gewichtsteilen urethanmodifizierter Polyisocyanatmischung angewandt werden.

Zur Verbesserung der Flammbeständigkeit können den erfindungsgemäß hergestellten Polyurethan-Weichschaumstoffen Flammschutzmittel einverleibt werden. Genannt seien beispielsweise Phosphor- und/oder Halogenatome enthaltende Verbindungen, die zusätzlich die Neigung zur Sprödigkeit in den Produkten verringern können und als Weichmacher fungieren, wie Trikresylphosphat, Tris-2-chloräthylphosphat, Tris-chlorpropylphosphat und Tris-2,3-dibrompropylphosphat, anorganische Flammschutzmittel, wie Antimontrioxid, Arsenoxid, Ammoniumphosphat, Ammoniumsulfat u.a. und vorzugsweise Cyansäurederivate, wie Cyanamid, Dicyanamid, Guanidin, insbesonders Guanidinsalze, Biguanid und insbesondere Melamin. Cyansäurederivate der genannten Art werden beispielsweise in der deutschen Patentanmeldung P 28 15 554,6 der BASF Aktiengesellschaft beschrieben. Im allgemeinen hat es sich als vorteilhaft erwiesen, 5 bis 70 Gewichtsteile, vorzugsweise 10 bis 50 Gewichtsteile der genannten Flammschutzmittel für jeweils 100 Gew.-Teile der urethanmodifizierten Polyisocyanatmischung zu verwenden.

Nähere Angaben über die obengenannten anderen üblichen Hilfs- und Zusatzstoffe sind der Fachliteratur, beispielsweise der Monographie von J.H. Saunders und K.C. Frisch « High Polymers » Band XVI, Polyurethanes, Teil 1 und 2, Verlag Interscience Publishers 1962 bzw. 1964, zu entnehmen.

Die Polyurethan-Weichschaumstoffe können nach dem Präpolymer- und vorzugsweise nach dem one shot-Verfahren hergestellt werden.

Erfolgt die Herstellung der Polyurethan-Weichschaumstoffe nach dem one shot-Verfahren, so wird üblicherweise eine Mischung aus Polyol, Wasser, Katalysator und gegebenenfalls Kettenverlängerungsmittel, Hilfs- und Zusatzstoffen mit der erfindungsgemäß verwendbaren urethanmodifizierten Polyisocyanatmischung bei Temperaturen von 15 bis 60 °C, vorzugsweise von 25 bis 40 °C in solchen Mengen zur Umsetzung gebracht, daß das Verhältnis von Hydroxylgruppen der Polyole und gegebenenfalls Kettenverlängerungsmittel zu NCO-Gruppen der urethanmodifizierten Polyisocyanatmischung 0,1 : 1 bis 0,4 : 1, vorzugsweise 0,15 : 1 bis 0,3 : 1 beträgt und das Verhältnis sämtlicher Zerewitinoff aktiver Wasserstoffatome-gebunden an Polyol, gegebenenfalls Kettenverlängerungsmittel und Wasser — zu NCO-Gruppe der urethanmodifizierten Polyisocyanatmischung ungefähr 0,7 bis 1,3 : 1, vorzugsweise 0,9 bis 1,1 : 1 ist. Bei Verwendung einer Mischkammer mit mehreren Zulaufdüsen können die flüssigen Ausgangsstoffe einzeln oder, sofern die Komponenten fest sind, in Form von Lösungen oder Suspensionen zugeführt und in der Mischkammer intensiv vermischt werden. Als besonders zweckmäßig hat es sich jedoch erwiesen, nach dem Zweikomponenten-Verfahren zu arbeiten und die Mischung aus Polyol, Wasser, Katalysator, gegebenenfalls Kettenverlängerungsmittel, Hilfs- und Zusatzstoffe zu der Komponente A zu vereinigen und als Komponente B die Polyisocyanatmischung zu verwenden.

Zur Herstellung der NCO-Gruppen haltigen Präpolymeren wird die erfindungsgemäß verwendbare urethanmodifizierte Polyisocyanatmischung mit den bereits genannten Polyolen und/oder Kettenverlängerungsmitteln in solchen Mengen zur Umsetzung gebracht, daß das Verhältnis von NCO-Gruppen zu Gesamthydroxyl 1,8 : 1 bis 55 : 1, vorzugsweise 4 : 1 bis 45 : 1 beträgt. Die erhaltenen Präpolymeren werden anschließend mit Wasser oder Mischungen aus Wasser und niedrigsiedenden, gegebenenfalls halogenierten Kohlenwasserstoffen und gegebenenfalls zusätzlichen Polyolen und/oder Kettenverlängerungsmitteln und Hilfs- und Zusatzstoffen gemischt und aufschäumen lassen.

Die Herstellung der Polyurethan-Weichschaumstoffe erfolgt bei erhöhten Temperaturen, beispielsweise bei Temperaturen von 15 bis 60 °C, vorzugsweise von 35 bis 45 °C. Ein Nachheizprozeß ist im allgemeinen nicht notwendig.

Die erfindungsgemäß hergestellten Polyurethan-Weichschaumstoffe besitzen Raumgewichte von 20 bis 150 g/l und zeichnen sich besonders durch ihre hohe Tragfähigkeit, Weiterreiß- und Zugfestigkeit aus.

Die Produkte eignen sich besonders zur Herstellung von Polstermöbel, Automobilsitze, Nackenstützen, Formkörpern und Hinterschäumung von Folien.

Die in den Beispielen genannte Teile beziehen sich auf das Gewicht.

## Beispiel 1

Herstellung urethanmodifizierter Polyisocyanatmischungen

Zu 95 Teilen einer Mischung aus Diphenylmethan-diisocyanaten und Polyphenyl-polymethylen-polyisocyanaten mit einem Gehalt an Diphenylmethan-diisocyanatisomeren von ca. 65 Gew.-% und einem Gehalt an 3-Kern-isomeren von ca. 10 Gew.-% werden unter Rühren bei Raumtemperatur 5 Teile oligomere Propylenglykole mit einem durchschnittlichen Molekulargewicht von 250 zugegeben. Das Gemisch wird 2 Stunden auf 80 °C erwärmt und danach abgekühlt. Man erhält eine urethanmodifizierte Polyisocyanatmischung mit einem NCO-Gehalt von 28,6 Gew.-% und einer Viskosität von 140 mPa.s bei 23 °C.

Verfährt man analog den Angaben von Beispiel 1, verwendet jedoch die in der Tabelle 1 zusammengestellten Ausgangskomponenten und Mengen, so erhält man die dort genannten urethanmodifizierten Polyisocyanatmischungen.

In Tabelle 1 wurden folgende Abkürzungen benützt :

Roh-MDI : Mischung aus Diphenylmethan-diisocyanaten und Polyphenyl-polymethylen-polyisocyanaten

rein-MDI : 4,4'-Diphenylmethan-diisocyanat 99,9 %ig

Mischung : erhaltene Mischung aus Roh-MDI und rein-MDI

$C_6$-Diol : Mischung aus isomeren Diolen mit 6 Kohlenstoffatomen mit einem mittleren Molekulargewicht von ungefähr 118

PP-10 : Polypropylenglykol mit einem mittleren Molekulargewicht von 1 000

PP-4 : Polypropylenglykol mit einem mittleren Molekulargewicht von 400.

(Siehe die Tabelle 1, Seite 6)

Tabelle 1
Urethanmodifizierte Polyisocyanatmischung

| Polyiso-cyanat-mischung | Diphenylmethan-diiso-cyanat und Polyphenyl-polymethylen-polyiso-cyanat | | Isomeren-gehalt | Hydroxylver-verbindung | | Urethanmodifizierte Polyisocyanatmischung | |
|---|---|---|---|---|---|---|---|
| Beispiel: | Art | Menge (Teile) | Art (Gew. %) | Art | Menge (Teile) | NCO-Gehalt (Gew.-%) | Viskosität (mPa.s 23 °C) |
| 2 | Roh-MDI | 67,8 | 2-Kern ~ 41 3-Kern ~ 23 | | | | |
| | rein-MDJ | 32,2 | | | | | |
| | Mischung | | 2-Kern ~ 60 3-Kern ~ 16 | C$_6$-Diol | 5,25 | 26,8 | 1 400 |
| 3 | Roh-MDJ | 59,3 | | | | | |
| | rein-MDJ | 40,7 | | | | | |
| | Mischung | | 2-Kern ~ 65 | Dipropylen-glykol | 3,67 | 28,3 | 370 |
| | | | 3-Kern ~ 14 | PP-10 | 1,58 | | |
| 4 | Roh-MDJ | 50,8 | | | | | |
| | rein-MDJ | 49,2 | | | | | |
| | Mischung | | 2-Kern ~ 70 | Thiodiglykol | 4,73 | 28,0 | 430 |
| | | | 3-Kern ~ 13 | Trimethylol-propan | 0,52 | | |
| 5 | Roh-MDJ | 33,9 | | | | | |
| | rein-MDJ | 66,1 | | | | | |
| | Mischung | | 2-Kern ~ 80 | Neopentyl-glykol | 4,2 | 25,2 | 950 |
| | | | 3-Kern ~ 9 | PP-4 | 6,3 | | |

Herstellung von Polyurethanschaumstoffen

Komponente A :
Als Komponente A wurde für die Beispiele 2-3 und Vergleichsbeispiele I-V stets dieselbe Mischung aus

100 Teilen eines Polyätherols auf Basis Dipropylenglykol-Propylenoxid-Äthylenoxid mit einer OH-Zahl von 29
3,2 Teilen Wasser
0,1 Teilen Aminkatalysator (Handelsprodukt [R]Desmorapid PV der Bayer AG, Leverkusen)
0,17 Teilen Bis-(β-(N,N'-dimethylamino)-äthyl)-äther
0,17 Teilen Triäthylen-diamin und
1,4 Teilen eines Schaumstabilisators auf Polysiloxanpolyoxyalkylenbasis (Handelsprodukt [R]Te-gostab B 4 690 der Goldschmitt AG, Essen)

verwendet.


Beispiel 6

105 Teile der Komponente A werden bei 25 °C mit 61,3 Teilen der Polyisocyanatmischung gemäß Beispiel 1 intensiv gemischt. Anschließend läßt man die Mischung aufschäumen.
Die schaumfähige Polyurethanmischung zeigt ein normales Verschäumungsverhalten (Startzeit 15 sec ; Steigzeit 85 sec.). Die mechanischen Eigenschaften der erhaltenen Schaumstoffes sind in Tabelle 2 zusammengefaßt.


Beispiel 7

105 Teile der Komponente A werden mit 69,8 Teilen der Polyisocyanatmischung gemäß Beispiel 2 bei 35 °C intensiv vermischt und anschließend bei einer Formtemperatur von 55 °C aufschäumen gelassen.
Die Startzeit beträgt 12 Sekunden, die Steigzeit 70 Sekunden. Die mechanischen Eigenschaften des gut verarbeitbaren Schaumstoffes sind in Tabelle 2 zusammengefaßt.

## Beispiel 8

Eine Mischung aus

630 Teilen eines Polyätherols auf Basis Dipropylenglykol, Propylenoxid, Äthylenoxid mit einer OH-Zahl von 29
70 Teilen eines Polyesterols auf Basis Adipinsäure, Äthylenglykol und Butandiol-1,4 mit einer OH-Zahl von 56
16,8 Teilen Wasser
35 Teilen Trichlorfluormethan
2,8 Teilen Aminkatalysator (Handelsprodukt [R]Desmorapid PV der Bayer AG, Leverkusen)
1,4 Teilen Triäthylendiamin
10 Teilen eines Schaumstabilisators auf Polysiloxanpolyoxyalkylenbasis (Tegostab B 4 690) wird bei 30 °C mit
375 Teilen der Polyisocyanatmischung gemäß Beispiel 1 intensiv gemischt und aufschäumen lassen. Die mechanischen Eigenschaften der erhaltenen Schaumstoffe sind in Tabelle 2 zusammengefaßt.

## Beispiel 9

Eine Mischung aus

300 Teilen eines Polyätherols auf Basis Dipropylenglykol, Propylenoxid, Äthylenoxid mit einer OH-Zahl von 29
11,7 Teilen Wasser
105 Teilen Dimethyläthanolamin
1,05 Teilen Triäthylendiamin
1,2 Teilen Zinndioctoat
2,1 Teilen eines Schaumstabilisators auf Polysiloxan-polyoxyalkylenbasis (Tegostab BF 2 370 der Goldschmitt AG, Essen)
30 Teilen Trichlorfluormethan wird mit 230 Teilen der Polyisocyanatmischung gemäß Beispiel 1 bei Temperaturen von 30 °C intensiv gemischt und anschließend aufschäumen lassen.

Die mechanischen Eigenschaften des erhaltenen Schaumstoffs sind in Tabelle 2 zusammengefaßt.

## Vergleichsbeispiel I

105 Teile der Komponente A werden mit 56,6 Teilen eines handelsüblichen Gemisches aus Diphenylmethan-diisocyanaten und Polyphenyl-polymethylen-diisocyanaten (Roh-MDI) mit einer Viskosität von 200 mPa.s und einem Diphenylmethan-diisocyanatisomeren-Gehalt von ca. 40 Gew.-% und einem 3-Kern-Isomerengehalt von ca. 20 Gew.% intensiv gemischt und bei 25 °C aufschäumen gelassen.
Die Startzeit hierbei beträgt 15 Sekunden, die Abbindezeit 120 Sekunden. Man erhält einen Polyurethanschaumstoff mit schlechter Gasausbeute und geringer Reißfestigkeit, dessen mechanischen Eigenschaften der Tabelle 2 entnommen werden können.

## Vergleichsbeispiel II

105 Teile der Komponente A werden mit 55,5 Teilen einer Mischung aus 77,8 Teilen Roh-MDI mit einem Diphenylmethan-diisocyanatgehalt von ca. 40 Gew.% und 22,2 Teilen 4,4'-Diphenylmethan-diisocyanat (die Mischung besitzt einen mittleren Diphenylmethan-diisocyanatgehalt von ca. 54 Gew.% und einen 3-Kern-Isomerengehalt von ca. 17 Gew.%) intensiv gemischt und bei 25 °C aufschäumen gelassen.
Die ermittelten Start- bzw. Steigzeiten betrugen 12 bzw. 80 Sekunden.
Der Polyurethanschaumstoff besaß eine mäßige Gasausbeute und unbefriedigende mechanische Eigenschaften.

(Siehe die Tabelle 2, Seite 8)

**0 004 879**

Tabelle 2
Mechanische Eigenschaften der Polyurethanschaumstoffe

| Beispiel | Vergleichs-beispiel | Raumgewicht (g/l) | Zugfestigkeit (N/mm²) | Dehnung (%) | Stauchhärte bei | | | Weiterreißfestigkeit (N/mm) |
|---|---|---|---|---|---|---|---|---|
| | | | | | 20 % | 40 % (N/mm²) | 60 % | |
| 6 | | 50 | 0,175 | 115 | 0,537 | 0,8 | 1,5 | 0,8 |
| 7 | | | | | | | | |
| 8 | | 41,5 | 0,135 | 150 | 0,185 | 0,265 | 0,445 | 0,56 |
| 9 | | 30,3 | 0,175 | 120 | 0,475 | 0,659 | 1,15 | 0,56 |
| | I | 33,2 | 0,06 | 75 | 0,13 | 0,18 | 0,3 | 0,25 |
| | II | 33,6 | 0,07 | 80 | 0,15 | 0,25 | 0,39 | 0,3 |

Die erfindungsgemäß hergestellten Polyurethan-Schaumstoffe gemäß Beispiele 6-9 besitzen deutlich bessere mechanische Eigenschaften gegenüber Produkten, die aus unmodifiziertem Roh-MDI mit einem Gehalt an 2-Kern-Isomeren kleiner 60 % erhalten wurden (Vergleichsbeispiele I und II).

Vergleichsbeispiel III

105 Teile der Komponente A werden mit 54,5 Teilen einer Mischung aus 55 Teilen Roh-MDI und 44,5 Teilen 4,4'-Diphenylmethan-diisocyanat (die Mischung besitzt einen mittleren Diphenylmethan-diisocyanatgehalt von ca. 67 Gew.% und einen 3-Kern-Isomerengehalt von 11-14 Gew.%) intensiv gemischt und bei 25 °C aufschäumen gelassen.
Es bildet sich zunächst ein Schaumstoff, der jedoch völlig kollabiert.

Vergleichsbeispiel IV

105 Teile der Komponente A werden mit 53,6 Teilen einer Mischung aus 33,4 Teilen Roh-MDI und 66,6 Teilen 4,4'-Diphenylmethan-diisocyanat (die Mischung besitzt einen mittleren Diphenylmethan-diisocyanatgehalt von 80-81,5 Gew.% und ein Gehalt an 3-kern-Isomeren von 7-8,5 Gew.-%) intensiv gemischt und bei 25 °C aufschäumen gelassen.
Der Schaumstoff kollabiert völlig.

Vergleichsbeispiel V

105 Teile der Komponente A werden mit einer Mischung aus 10 Teilen Roh-MDI und 90 Teilen 4,4'-Diphenylmethan-diisocyanat, die mit 10 Teilen Neopentylglykol modifiziert wurde (die urethanmodifizierte Polyisocyanatmischung besaß einen Diphenylmethan-diisocyanatgehalt von 95 Gew.%) intensiv gemischt und bei 25 °C aufschäumen gelassen.
Der Schaumstoff kollabiert.

Vergleichsbeispiel VI

Entsprechend der Lehre der GB-PS 874 430 wird eine Mischung aus

97,7 Teilen eines Polypropylenglykols mit einem Molekulargewicht von ungefähr 2 000
0,7 Teilen Dimethylcyclohexylamin
1 Teil äthoxyliertes Octylphenol und
2 Teilen Wasser mit 42,3 Teilen einer Mischung aus 25 Teilen Roh-MDI und 75 Teilen 4,4'-Diphenylmethan-diisocyanat (der mittlere 2-Kern-Gehalt der Mischung beträgt 85 Gew.%) intensiv gemischt und bei 25 °C aufschäumen gelassen.

Der Schaumstoff kollabierte völlig und man erhielt eine nicht verwendbare, pulverartige Masse.
Im Gegensatz hierzu können mit den urethanmodifizierten Polyisocyanatmischungen nach den Beispielen 1 bis 5 Schaumstoffe mit guten mechanischen Eigenschaften hergestellt werden.

Beispiel 10

Polyol Komponente B :
Als Polyolkomponente B wurde für Beispiel 10 und Vergleichsbeispiel VII dieselbe Mischung aus :

900 Teilen eines Polyätherdiols auf Basis Dipropylenglykol, Propylenoxid und Äthylenoxid mit überwiegend primären Hydroxylgruppen und einer OH-Zahl von 28

27 Teilen Wasser
2 Teilen Desmorapid PV
2 Teilen Bis-[β-(N,N-dimethylamino)-äthyl]-äther
2 Teilen Triäthylendiamin
10 Teilen Tegostab B 4 690 und
1 Teil Dibutylzinndilaurat

verwendet.

200 Teile der Polyolkomponente B werden mit 127,3 Teilen eines Prepolymeren mit einem NCO-Gehalt von 23,7 Gew.% und einer Viskosität von 680 mPa.s bei 23 °C der folgenden Zusammensetzung :

43,2 Teilen 4,4'-Diphenylmethan-diisocyanat
31,8 Teilen Roh-MDI (die erhaltene Mischung besitzt einen 2-Kerngehalt von ~ 75 %)
3 Teilen eines Polypropylenglykols mit einem mittleren Molekulargewicht von ungefähr 400
2 Teilen Neopentylglykol und
20 Teilen eines Polyätherdiols auf Basis Dipropylenglykol, Propylenoxid und Äthylenoxid mit überwiegend primären Hydroxylgruppen und einer OH-Zahl von 28 intensiv vermischt und aufschäumen gelassen.

Man erhält einen Schaumstoff mit guten mechanischen Eigenschaften.

Vergleichsbeispiel VII

200 Teile der Polyolkomponente B werden mit 111,3 Teilen eines Prepolymeren mit einem NCO-Gehalt von 27,15 Gew.% und einer Viskosität von 170 mPa.s bei 23 °C der folgenden Zusammensetzung

43,2 Teilen 4,4'-Diphenylmethan-diisocyanat
31,8 Teilen Roh-MDI und
20 Teilen eines Polyätherdiols auf Basis Dipropylenglykol, Propylenoxid und Äthylenoxid mit überwiegend primären OH-Gruppen und einer OH-Zahl von 28 intensiv vermischt und aufschäumen gelassen.

Der Schaumstoff kollabiert völlig.

**Ansprüche**

1. Verfahren zur Herstellung von Polyurethan-Weichschaumstoffen mit Dichten von 20 bis 150 g/l, dadurch gekennzeichnet, daß man

A) urethanmodifizierte aromatische Polyisocyanate mit einem NCO-Gehalt von 15 bis 30 Gew.-% und einer Viskosität von 100 bis 2 000 mPa.s/20 °C, die erhalten werden durch Umsetzung einer Mischung aus Diphenylmethan-diisocyanaten und Polyphenyl-polymethylen-polyisocyanaten mit einem Gehalt an Diphenylmethandiisocyanat-Isomeren von 55 bis 85 Gew.-%, bezogen auf das Gesamtgewicht der Mischung, und einer Hydroxylverbindung mit 2 bis 4 Zerewitinoff aktiven Wasserstoffatomen und einem Molekulargewicht von 60 bis 1 500 im Äquivalenzverhältnis von NCO-Gruppe zu aktiven Wasserstoffatom der Hydroxylverbindung von 2 : 1 bis 60 : 1 mit

B) Polyolen mit Molekulargewichten von 400 bis 7 500 und Funktionalitäten von 2 bis 3,5 aus der Gruppe der hydroxylgruppenhaltigen Polymeren, Polyesterolen und Polyetherolen oder deren Gemischen und

C) Wasser oder Mischungen aus Wasser und chemisch inerten niedrigsiedenden ggf. halogenierten Kohlenwasserstoffen oder Ethern als Treibmittel in Gegenwart von

D) Katalysatoren,
E) ggf. Kettenverlängerungsmitteln
F) Hilfsmitteln und Zusatzstoffen

bei Temperaturen von 15° bis 60 °C zur Reaktion bringt und 2 bis 6 Gew.-% Wasser, bezogen auf das Polyolgewicht, verwendet.

2. Verfahren nach Anspruch 1, dadurch gekennzeichnet, daß das Verhältnis von Hydroxylgruppen der Polyole (B) und ggf. Kettenverlängerungsmittel (E) zu NCO-Gruppen der urethan-modifizierten Polyisocyanate (A) 0,1 bis 0,4 : 1 und das Verhältnis sämtlicher Zerewitinoff aktiver Wasserstoffatome — gebunden an Polyol (B), Wasser (C) und ggf. Kettenverlängerungsmittel (E) — zu NCO-Gruppen der urethanmodifizierten Polyisocyanate 0,7 bis 1,3 : 1 sind.

3. Verfahren nach Anspruch 1, dadurch gekennzeichnet, daß die Treibmittelmischung besteht aus 5 bis 70 Gew.-% Wasser und 30 bis 95 Gew.-% chemisch inerten, niedrigsiedenden ggf. halogenierten Kohlenwasserstoffen oder Ethern, wobei die Gew.-% bezogen sind auf das Gesamtgewicht der Treibmittelmischung.

# 0 004 879

## Claims

1. A process for the production of flexible polyurethane foams having densities of from 20 to 150 g/l, characterized in that

A) urethane-modified aromatic polyisocyanates having an NCO content of from 15 to 30 % by weight and a viscosity of from 100 to 2 000 mPa at 20 °C, which are obtained by reacting a mixture of diphenylmethane diisocyanates and polyphenyl-polymethylene polyisocyanates having a diphenylmethane diisocyanate isomer content of from 55 to 85 % by weight, based on the total weight of the mixture, and a hydroxyl compound having from 2 to 4 hydrogen atoms capable of undergoing a Zetewitinoff reaction, and a molecular weight of from 600 to 1 500 in an equivalence ratio of NCO group to active hydrogen atom of the hydroxyl compound of from 2 : 1 to 60 : 1, are reacted at a temperature of from 15 to 60 °C with

B) polyols having a molecular weight of from 400 to 7 500 and functionalities of from to 2 to 3.5, and selected from the group consisting of hydroxyl-containing polymers, polyesterols and polyetherols and mixtures thereof, and

C) water or mixtures of water and chemically inert, low-boiling, optionally halogenated hydrocarbons or ethers as expanding agent, in the presence of

D) catalysts,

E) optional chain-extending agents, and

F) auxiliaries and additives,

and from 2 to 6 % by weight, based on the weight of polyol, of water is used.

2. A process as claimed in claim 1, characterized in that the ratio of hydroxyl groups of the polyols (B) and optional chain-extending agents (E) to NCO groups of the urethane-modified polyisocyanates (A) is from 0.1 to 0.4 : 1, and the ratio of all the hydrogen atoms capable of undergoing a Zerewitinoff reaction — attached to polyol (B), water (C) and optional chain-extending agent (E) — to NCO groups of the urethane-modified polyisocyanates is from 0.7 to 1.3 : 1.

3. A process as claimed in claim 1, characterized in that the expanding agent mixture consists of from 5 to 70 % by weight of water and 30 to 95 % by weight of chemically inert, low-boiling, optionally halogenated hydrocarbons or ethers, the percentages by weight being based on the total weight of the expanding agent mixture.

## Revendications

1. Procédé de préparation de matières alvéolaires souples à base de polyuréthane, d'une densité de 20 à 150 g/l, caractérisé par le fait qu'on fait réagir, à des températures de 15 à 60 °C :

A) des polyisocyanates aromatiques modifiés par de l'uréthane, d'une teneur en NCO de 15 à 30 % en poids et d'une viscosité de 100 à 2 000 mPa.s/20 °C, qui ont été obtenus par réaction d'un mélange de diphénylméthane-diisocyanates et de polyphényl-polyméthylène-polyisocyanates d'une teneur en diphé-nylméthane-diisocyanate-isomères de 55 à 85 % en poids, rapportée au poids total du mélange, et d'un composé hydroxyle à 2 à 4 atomes d'hydrogène actifs selon Zerewitinoff et d'un poids moléculaire de 60 à 1 500, en rapport d'équivalence de groupe NCO à atome d'hydrogène actif du composé hydroxyle de 2/1 à 60/1, avec

B) des polyols à poids moléculaires de 400 à 7 500 et de fonctionnalités de 2 à 3,5, du groupe des polymères, polyestérols et polyéthérols à groupes hydroxyle, ou leurs mélanges, et

C) comme agent gonflant, de l'eau ou des mélanges d'eau et d'hydrocarbures chimiquement inertes à bas point d'ébullition, éventuellement halogénés, ou d'éthers, en présence

D) de catalyseurs,

E) éventuellement d'agents d'allongement de chaîne

F) d'auxiliaires et additifs

et on utilise 2 à 6 % en poids d'eau, rapportée au poids du polyol.

2. Procédé selon la revendication 1, caractérisé par le fait que le rapport des groupes hydroxyle des polyols (B) et éventuellement des allongeurs de chaîne (E) aux groupes NCO des polyisocyanates modifiés par de l'uréthane (A) est de 0,1 à 0,4/1 et le rapport des atomes d'hydrogène actifs selon Zerewitinoff — liés au polyol (B), eau (C) et éventuellement prolongateurs de chaîne (E) — aux groupes NCO des polyisocyanates modifiés par de l'uréthane est de 0,7 à 1,3/1.

3. Procédé selon la revendication 1, caractérisé par le fait que le mélange d'agent gonflant est constitué de 5 à 70 % en poids d'eau et 30 à 95 % en poids d'hydrocarbures chimiquement inertes, à bas point d'ébullition, éventuellement halogénés, ou d'éthers, les pourcentages en poids étant rapportés au poids total du mélange d'agent gonflant.